# EUROPEAN PATENT APPLICATION

(11) **EP 4 741 679 A1**
(43) Date of publication of application: **13.05.2026**
(21) Application number: 25199875.3
(22) Date of filing: 03.09.2025
(51) Int. Cl.: F16F 15/023, B01F 23/53, B01F 27/806, B01F 29/81, B01F 29/83, F16F 15/08

(54) **APPARATUS FOR REDUCING VIBRATION OF MIXER USED IN MANUFACTURING OF ELECTRODE SLURRY**

(30) Priority: 06.11.2024 KR 20240156602
(71) Applicant: SAMSUNG SDI CO., LTD., Yongin-si, Gyeonggi-do 17084 (KR)
(72) Inventor: SEO, Wonsub, 17084 Yongin-si, Gyeonggi-do (KR); KIM, Jongseon, 17084 Yongin-si, Gyeonggi-do (KR); KIM, Seonguk, 17084 Yongin-si, Gyeonggi-do (KR); LEE, Hoogil, 17084 Yongin-si, Gyeonggi-do (KR); PYO, Young-Hak, 17084 Yongin-si, Gyeonggi-do (KR)
(74) Representative: Michalski Hüttermann & Partner Patentanwälte mbB

(57) **Abstract**

A vibration prevention apparatus for reducing vibration of a mixer used in manufacturing of an electrode slurry includes a rotation roller member between an inner vessel and an outer vessel extending around the inner vessel of the mixer and a damping cylinder on the outer vessel and configured to absorb the vibration transferred through the rotation roller member to reduce the vibration.

## Description

### CROSS-REFERENCE TO RELATED APPLICATION

The present application claims priority to and the benefit of Korean Patent Application No. 10-2024-0156602, filed on November 06, 2024, in the Korean Intellectual Property Office.

### BACKGROUND

### 1. Field

Aspects of embodiments of the present disclosure relate to an apparatus for reducing vibration of a mixer used in manufacturing of an electrode slurry.

### 2. Description of the Related Art

Electrode slurries (e.g., positive electrode slurries) are mixtures that perform an important function in a manufacturing process of a battery (e.g., a lithium ion battery). Mixers are used generally to manufacture an electrode slurry. Mixers have a structure in which a mixing blade, referred to as a rotor, and a vessel containing electrode slurries rotate to mix the electrode slurries.

A mixing operation of such mixers is performed according to a method which mixes electrode slurries contained in a vessel while rotating a rotor and the vessel. During mixing, vibration occurs in the vessel due to the rheology of electrode slurries.

Such vibration of a vessel may be a large vibration, which transfers to the outside and floor of the facility, causing nearby workers to feel at risk. The vibration increases as a working volume increases, causing a reduction in yield rate of products.

### SUMMARY

According to embodiments of the present disclosure, an apparatus (referred to as vibration prevention apparatus) which may reduce vibration of an inner vessel occurring in (or during) a mixing operation of a mixer for manufacturing an electrode slurry is provided.

Moreover, embodiments of the present disclosure provide an apparatus which may reduce vibration of an outer vessel occurring in a mixing operation of a mixer for manufacturing an electrode slurry.

Moreover, embodiments of the present disclosure provide an apparatus which may reduce vibrations of an inner vessel and an outer vessel occurring in a mixing operation of a mixer for manufacturing an electrode slurry.

Furthermore, embodiments of the present disclosure provide a mixer comprising an apparatus for reducing vibration of an inner vessel, or an apparatus for reducing vibration of an outer vessel, or an apparatus for reducing vibration of an inner vessel and an outer vessel.

An apparatus for reducing vibration of an inner vessel occurring in a mixing operation of a mixer used in manufacturing of an electrode slurry includes a rotation roller member between the inner vessel and an outer vessel extending around the inner vessel and a damping cylinder on the outer vessel and configured to absorb the vibration transferred through the rotation roller member to reduce the vibration.

According to another embodiment of the present disclosure, an apparatus for reducing vibration of an outer vessel occurring in a mixing operation of a mixer used in manufacturing of an electrode slurry includes a link member configured to rotate based on vibration of the outer vessel in contact with the outer vessel and a hydraulic cylinder configured to absorb the vibration of the outer vessel transferred by a rotation of the link member to reduce the vibration.

According to another embodiment of the present disclosure, an apparatus for reducing vibrations of an inner vessel and an outer vessel occurring in a mixing operation of a mixer used in manufacturing of an electrode slurry includes a first vibration prevention apparatus configured to reduce vibration of the inner vessel and a second vibration prevention apparatus configured to reduce vibration of the outer vessel extending around the inner vessel. The first vibration prevention apparatus includes a rotation roller member between the inner vessel and the outer vessel and a damping cylinder on the outer vessel and configured to absorb the vibration transferred through the rotation roller member to reduce the vibration, and the second vibration prevention apparatus includes a link member configured to rotate based on the vibration of the outer vessel in contact with the outer vessel and a hydraulic cylinder configured to absorb the vibration of the outer vessel transferred by a rotation of the link member to reduce the vibration.

According to embodiments of the present disclosure, a rotation roller member may be between an inner vessel and an outer vessel, which together configuring a vessel, and a damping cylinder on an outer surface of the outer vessel may receive and reduce, through the rotation roller member, vibration of the inner vessel occurring due to the rheology of a slurry contained in the inner vessel in a mixing operation of a mixer and, thus, may effectively prevent the vibration of the inner vessel.

Moreover, a hydraulic cylinder disposed at a periphery of the outer vessel may receive and reduce, through a link member, vibration of the outer vessel occurring due to the rheology of the slurry occurring in the mixing operation of the mixer and, thus, may effectively prevent the vibration of the outer vessel.

It is to be understood that both the foregoing general description and the following detailed description of the present disclosure are exemplary and explanatory in nature and are intended to provide further explanation of the present disclosure as claimed.

### BRIEF DESCRIPTION OF THE DRAWINGS

The accompanying drawings, which are included to provide a further understanding of the present disclosure and are incorporated in and constitute a part of this application, illustrate embodiments of the present disclosure and, together with the description, describe aspects and features of the present disclosure.
FIG. 1 is a perspective view of a mixer for manufacturing an electrode slurry according to embodiments of the present disclosure.
FIG. 2 is a cross-sectional view of the mixer illustrated in FIG. 1.
FIG. 3 is a front cross-sectional view of an apparatus for reducing vibration of an inner vessel according to an embodiment of the present disclosure.
FIG. 4 is a detailed configuration diagram of the apparatus illustrated in FIG. 3.
FIG. 5 is a front cross-sectional view of an apparatus for reducing vibration of an outer vessel according to another embodiment of the present disclosure.
FIG. 6 is a detailed configuration diagram of the apparatus illustrated in FIG. 5.
FIG. 7 is a front cross-sectional view of an apparatus for reducing vibrations of an inner vessel and an outer vessel according to another embodiment of the present disclosure.
FIG. 8 is a plan view of a vessel illustrating an arrangement structure of first and second vibration prevention apparatuses shown in FIGS. 6 and 7.

### DETAILED DESCRIPTION

Hereinafter, embodiments of the present disclosure will be described, in detail, with reference to the accompanying drawings. The terms or words used in this specification and claims should not be construed as being limited to their usual or dictionary meaning but should be interpreted as having meanings and concepts consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

An apparatus (e.g., a first vibration prevention apparatus) for reducing vibration of an inner vessel occurring in (or during) a mixing operation of a mixer used in manufacturing of an electrode slurry, according to embodiments of the present disclosure, includes a rotation roller member disposed between the inner vessel and an outer vessel surrounding (e.g., extending around) the inner vessel and a damping cylinder disposed in the outer vessel and configured to absorb the vibration transferred through the rotation roller member to reduce (or damp) the vibration.

In embodiments, the damping cylinder may be disposed at equal intervals on (or along) an outer surface of the outer vessel.

In embodiments, the rotation roller member may be disposed at equal intervals at a position corresponding to the damping cylinder between the inner vessel and the outer vessel.

In embodiments, the rotation roller member may include a roller configured to rotate while in contact with an outer surface of the inner vessel and a fixing member configured to fix the roller.

In embodiments, the damping cylinder may include a cylinder body, a piston rod configured to pass through the outer vessel and receive vibration of the inner vessel from the rotation roller member, a piston connected to the piston rod and configured to move backwardly in the cylinder body based on the vibration of the inner vessel transferred from the piston rod, and a damping medium configured to be compressed and expanded to absorb the vibration of the inner vessel based on the movement of the piston in the cylinder body.

In embodiments, the damping medium may be air or a fluid.

An apparatus (e.g., a second vibration prevention apparatus) for reducing vibration of an outer vessel occurring in a mixing operation of a mixer used in manufacturing of an electrode slurry, according to embodiments of the present disclosure, includes a link member configured to rotate based on vibration of the outer vessel in contact with the outer vessel and a hydraulic cylinder configured to absorb the vibration of the outer vessel transferred by a rotation of the link member to reduce the vibration.

In embodiments, the apparatus may be disposed at equal intervals on (or along) a perimeter of the outer vessel.

In embodiments, the link member may include a first end portion configured to contact a jaw formed at an upper end of the outer vessel, a second end portion rotatably connected to a piston rod of the hydraulic cylinder, and a third end portion rotatably connected to a plate disposed on the outer vessel.

In embodiments, a rotation roller contacting a jaw formed at the upper end of the outer vessel may be connected to the first end portion.

In embodiments, the hydraulic cylinder may include a cylinder body, a piston rod connected to one end portion of the link member and configured to receive the vibration of the outer vessel from the link member, a piston connected to the piston rod and configured to move backwardly in the cylinder body based on the vibration of the outer vessel transferred from the piston rod, and a hydraulic fluid configured to be compressed and expanded to absorb the vibration of the outer vessel based on the movement of the piston in the cylinder body.

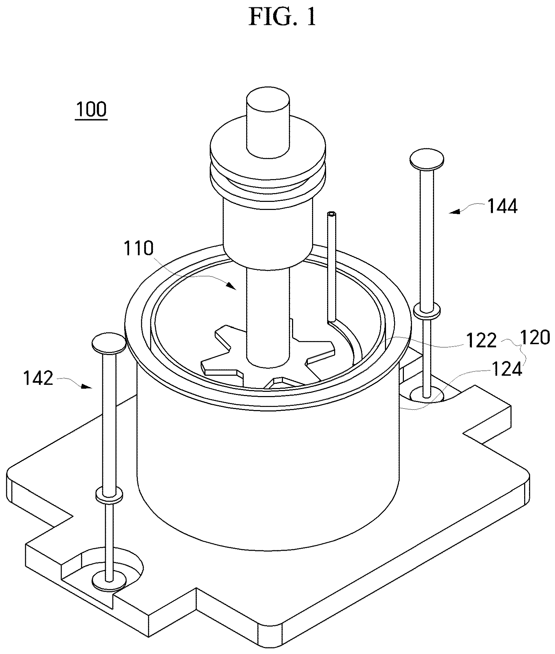

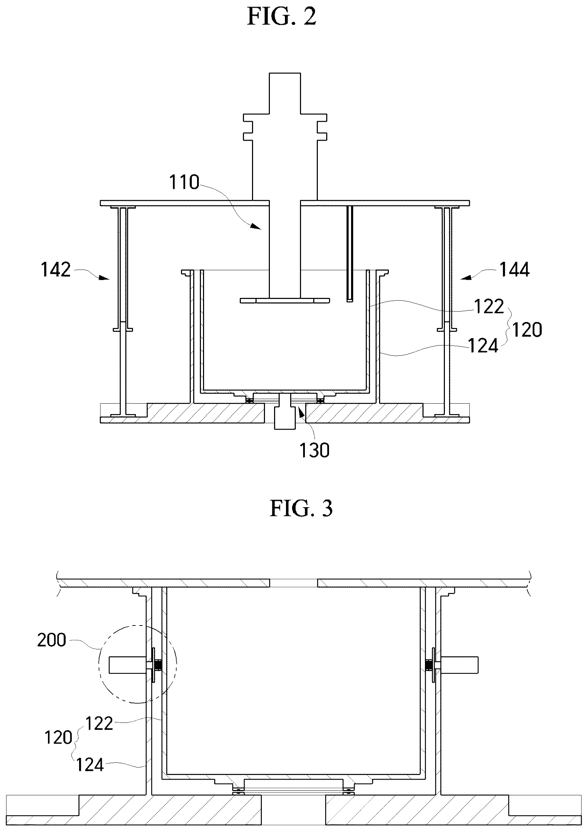

FIG. 1 is a perspective view of a mixer 100 for manufacturing an electrode slurry according to embodiments of the present disclosure. FIG. 2 is a cross-sectional view of the mixer 100 illustrated in FIG. 1.

Referring to FIGS. 1 and 2, the mixer 100, according to embodiments of the present disclosure, may be an apparatus used in manufacturing of an electrode slurry (e.g., a positive electrode slurry), which is a mixture for performing a function in a manufacturing process of a battery (e.g., a lithium ion battery).

The mixer 100 may have a structure in which a mixing blade 110, referred to as a rotor, and a vessel 120 containing electrode slurries (or containing an electrode slurry) rotate to mix the electrode slurries. The vessel 120 may include a cylindrical inner vessel 122 and a cylindrical outer vessel 124 surrounding (e.g., extending around) the inner vessel 122. The inner vessel 122 may be rotated by (e.g., may be rotated on) a thrust bearing 130 disposed thereunder. Two main hydraulic cylinders 142 and 144 may be respectively disposed at opposite sides of (e.g., at a left side and a right side of) the outer vessel 124. The outer vessel 124 may be fixed by the two main hydraulic cylinders 142 and 144.

As described above, a mixing operation may be performed according to a method including mixing electrode slurries contained in the inner vessel 122 while rotating the mixing blade 110 and the inner vessel 122, and at this time, vibration occurs in the facility (e.g., the facility where the mixer 100 is located) due to the rheology of slurries.

In the vessel 120, which includes the inner vessel 122 and the outer vessel 124, the inner vessel 122 may have a structure vulnerable to vibration (e.g., shaking in a horizontal direction) caused by rotation. The outer vessel 124 may have a structure that hangs (e.g., is suspended) on the two main hydraulic cylinders 142 and 144 disposed at a left side and a right side. Considering a volume occupied by the vessel 120 in entire facilities, a structure in which the outer vessel 124 is supported by the two main hydraulic cylinders 142 and 144 may also be a structure which is vulnerable to vibration.

Therefore, according to an embodiment of the present disclosure, an apparatus for reducing vibration of the inner vessel 122 shown in FIGS. 1 and 2 may be added to the mixer 100. In another embodiment of the present disclosure, an apparatus for reducing vibration of the outer vessel 124 shown in FIGS. 1 and 2 may be added to the mixer 100. In yet another embodiment of the present disclosure, an apparatus for simultaneously reducing vibrations of the inner vessel 122 and the outer vessel 124 may be added to the mixer 100 based on a combination of prior embodiments.

### Apparatus for Reducing Vibration of the Inner Vessel

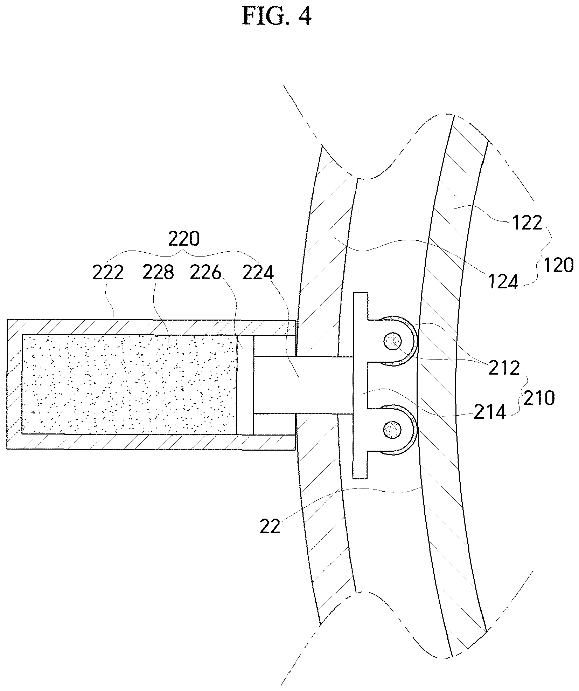

FIG. 3 is a front cross-section view of an apparatus 200 for reducing vibration of an inner vessel, according to an embodiment of the present disclosure. FIG. 4 is a detailed configuration diagram of the apparatus 200 illustrated in FIG. 3.

Referring to FIGS. 3 and 4, the apparatus (hereinafter referred to as a first vibration prevention apparatus) 200 for reducing vibration of an inner vessel 122 may be disposed on an outer surface of the outer vessel 124. In FIGS. 3 and 4, for conciseness of the drawings, only two first vibration prevention apparatuses 200 are illustrated, but the present disclosure is not limited thereto and four or more first vibration prevention apparatuses 200 may be arranged at equal intervals along (or on) an outer surface of the outer vessel 124.

To reduce vibration of the inner vessel 122, the first vibration prevention apparatus 200 may include a rotation roller member 210 and a damping cylinder 220.

The rotation roller member 210 may be disposed between the inner vessel 122 and the outer vessel 124 and may transfer vibration (e.g., vibration energy or horizontal shaking) that occurs when the inner vessel 122 rotates to the damping cylinder 220. The rotation roller member 210 may be referred to as a "rotation roller bearing".

The rotation roller member 210 may include a roller 212 that rotates in contact with (e.g., rotates along) an outer surface 22 of the inner vessel 122 and a fixing member 214 that fixes the roller 212 to transfer vibration (e.g., vibration energy or horizontal shaking) that occurs when the inner vessel 122 rotates to the damping cylinder 220. The roller 212 may not hinder rotational motion of the inner vessel 122 by reducing or minimizing friction on the outer surface 22 of the inner vessel 122 and, moreover, may effectively receive vibration of the inner vessel 122 to transfer the vibration to the damping cylinder 220 through the fixing member 214. Also, the roller 212 may decrease noise.

The damping cylinder 220 may include a cylinder body 222, a piston rod 224, a piston 226, and a damping medium 228 to absorb vibration of the inner vessel 122 transferred through the fixing member 214 to reduce vibration.

The piston rod 224 may pass through the outer vessel 124 and may be connected to the fixing member 214. Therefore, the piston rod 224 may receive vibration of the inner vessel 122 from the rotation roller member 210. The piston rod 224 and the fixing member 214 may be configured as one body (e.g., may be integrally formed).

The piston 226 may be connected to the piston rod 224 and may move backwardly in (e.g., may move further into) the cylinder body 222 based on the vibration of the inner vessel 122 transferred from the rotation roller member 210.

As the piston moves in the cylinder body 222, the damping medium 228 may be compressed or expanded to absorb and reduce the vibration of the inner vessel 122. The damping medium 228 may be (or may use) air, a fluid, a rubber pad, or a spring.

As described above, when vibration or shaking, which occurs when the inner vessel 122 rotates, is transferred to the damping cylinder 220, the piston 226 may move in the cylinder body 222 and may absorb the vibration of the inner vessel 122. The movement of the piston 226 may be controlled by the damping medium 228, and vibration may be reduced in a process in which the piston 226 returns to an original position. Such a process may be repeated, and thus, vibration caused by shaking of the inner vessel 122 may be effectively reduced.

### Apparatus for Reducing Vibration of the Outer Vessel

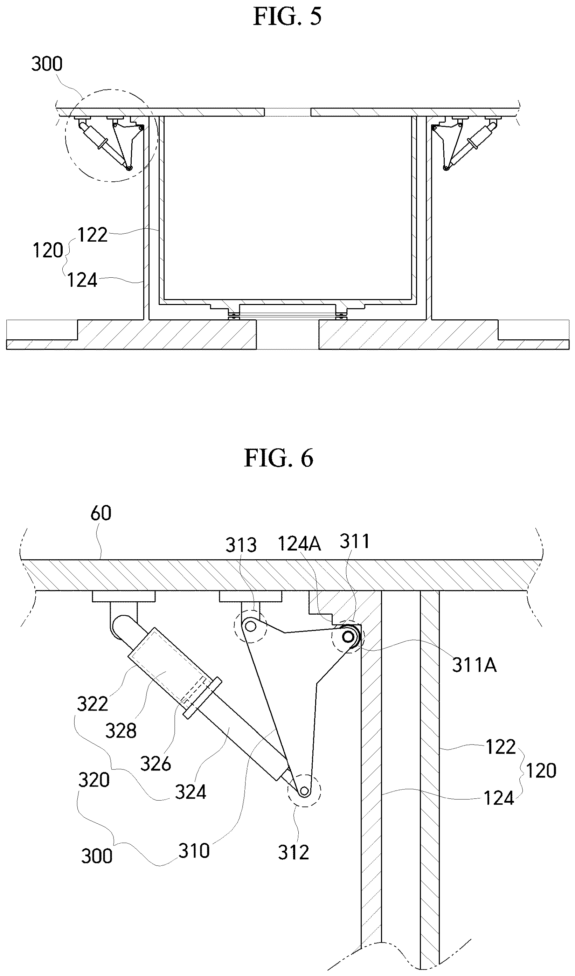

FIG. 5 is a front cross-sectional view of an apparatus 300 for reducing vibration of an outer vessel according to an embodiment of the present disclosure. FIG. 6 is a detailed configuration diagram of the apparatus 300 illustrated in FIG. 5.

Referring to FIGS. 5 and 6, the apparatus (hereinafter referred to as a second vibration prevention apparatus) 300 for reducing vibration of an outer vessel 124, according to an embodiment of the present disclosure, may be disposed on a perimeter of the outer vessel 124. In FIGS. 5 and 6, for conciseness of the drawings, only two second vibration prevention apparatuses 300 are illustrated, but the present disclosure is not limited thereto and four or more second vibration prevention apparatuses 300 may be disposed on (or along) the perimeter of the outer vessel 124.

To reduce vibration of the outer vessel 124, the second vibration prevention apparatus 300 may include a link member 310, which rotates based on vibration of the outer vessel 124 in contact with the outer vessel 124, and a hydraulic cylinder 320, which absorbs the vibration of the outer vessel 124 transferred by a rotational motion of the link member 310, to reduce the vibration.

The link member 310 may be an element that transfers the vibration (e.g., shaking in a horizontal direction) of the outer vessel 124 to the hydraulic cylinder 320 and, for example, may be formed in a triangular shape including three end portions (e.g., first to third end portions) 311 to 313. The first end portion 311 may contact a jaw 124A, which is formed at an upper end of the outer vessel 124. A rotation roller 311A contacting the jaw 124A formed at the upper end of the outer vessel 124 may be connected to the first end portion 311. The rotation roller 311A connected to the first end portion 2311 may allow the link member 310 to naturally deviate from the jaw 124A formed at an upper end of the outer vessel 124 when the outer vessel 124 is lowered by two main hydraulic cylinders (see, e.g., 142 and 144 in FIG. 1) to clean (or to allow for cleaning of) the vessel 120. The second end portion 312 may be rotatably connected to a piston rod 324 of the hydraulic cylinder 320, and the third end portion 313 may be disposed on at an upper portion of the outer vessel 124 and may be rotatably connected to a plate 60 covering an upper portion of the vessel 120.

The hydraulic cylinder 320 may be fixed to the plate 60 and may absorb vibration of the outer vessel 124 transferred through the link member 310 to reduce the vibration. To this end, the hydraulic cylinder 320 may include a cylinder body 322, a piston rod 324, a piston 326, and a hydraulic fluid 328.

One end portion of the piston rod 324 may be connected to the second end portion 312 of the link member 310 and may receive the vibration of the outer vessel 124 from the link member 310.

The piston 326 may be connected to the other end portion of the piston rod 324 and may move backwardly in (e.g., may move further into) the cylinder body 322 based on the vibration of the outer vessel 124 transferred from the piston rod 324.

The hydraulic fluid 328 may be compressed or expanded based on the movement of the piston 326 in the cylinder body 322 and may, thus, absorb the vibration of the outer vessel 124.

As described above, when the vibration (e.g., shaking in a horizontal direction) of the outer vessel 124 is transferred to the hydraulic cylinder 320 through the link member 310, the hydraulic fluid 328 may absorb the vibration of the outer vessel 124 corresponding to the movement of the piston 326 in the cylinder body 322. The movement of the piston 326 may be controlled by the hydraulic fluid 328, and vibration may be reduced in a process where the piston 326 returns to an original position. Such a process may be repeated, and thus, vibration caused by shaking of the outer vessel 124 may be effectively reduced.

When four second vibration prevention apparatuses 300 are arranged respectively at equal intervals at four positions on (or along) the perimeter of the outer vessel 124, because four hydraulic cylinders in the four second vibration prevention apparatuses are added in addition to the two main hydraulic cylinders 142 and 144 disposed at the left side and the right side of the outer vessel 124 shown in FIG. 1, a structure including a total of six hydraulic cylinders strongly preventing vibration (e.g., vibration in a horizontal direction) of the outer vessel 124 may be implemented. Accordingly, insufficient vibration damping of the outer vessel 124 that occurs by using only two main hydraulic cylinders (see, e.g., 142 and 144 in FIG. 1) may be remedied.

### Apparatus for Reducing Vibration of the Inner and Outer Vessels

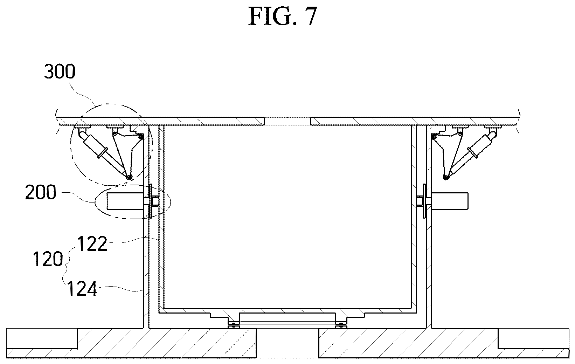

FIG. 7 is a front cross-sectional view of an apparatus for simultaneously reducing vibrations of an inner vessel and an outer vessel according to an embodiment of the present disclosure.

Referring to FIG. 7, the first vibration prevention apparatus 200 as described above and the second vibration prevention apparatus 300 as described above may be disposed together in a vessel 120. Descriptions of the first and second vibration prevention apparatuses 200 and 300 provided above apply equally here and will not be repeated. However, in an arrangement structure, when the vessel 120 is viewed from above, the first and second vibration prevention apparatuses 200 and 300 may be disposed at the same position, and when the vessel 120 is seen from the front (or from the side), the second vibration prevention apparatus 300 may be disposed above the first vibration prevention apparatus 200 in a vertical direction (e.g., the second vibration prevention apparatus 300 may be above and vertically aligned with the first vibration prevention apparatus 200).

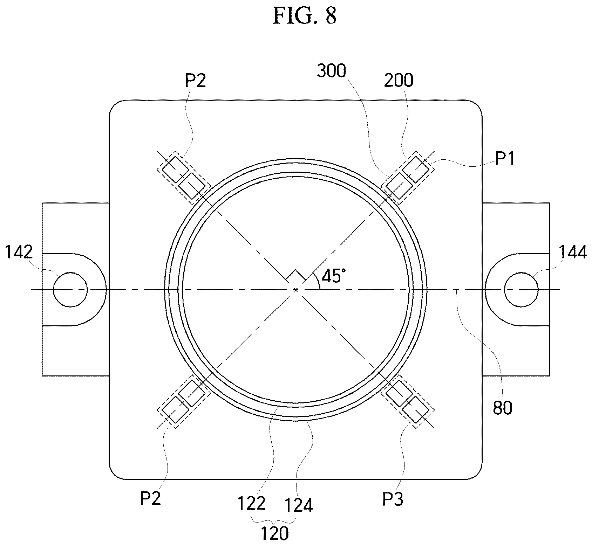

FIG. 8 is a plan view of a vessel viewed from above illustrating an arrangement structure of first and second vibration prevention apparatuses according to an embodiment of the present disclosure.

Referring to FIG. 8, although the present disclosure is not limited there, when four of each of the first and second vibration prevention apparatuses 200 and 300 are arranged at equal intervals on (or along) an outer surface and/or a perimeter of a vessel 120, vibrations of an inner vessel 122 and an outer vessel 124 forming (or configuring) a vessel 120 may be uniformly prevented without being biased. Therefore, the stability of the vessel 120 may increase, and vibration may be efficiently prevented. For example, when the vessel 120 is viewed from above, in an embodiment in which the first and second vibration prevention apparatuses 200 and 300 disposed at the same position (referred to as "vibration prevention apparatus pair"), one vibration prevention apparatus pair P1 may be disposed at a 45-degree position with respect to a virtual line 80 extending between the two main hydraulic cylinders 142 and 144, and the other three vibration prevention apparatus pairs P2 to P4 may be arranged at an 90-degree equal interval with respect to the vibration prevention apparatus pair P1. Such an arrangement structure may be intactly applied to the above-described embodiments.

According to embodiments of the present disclosure, a rotation roller member may be disposed between an inner vessel and an outer vessel configuring a vessel, and a damping cylinder disposed on an outer surface of the outer vessel may receive and reduce, through the rotation roller member, vibration of the inner vessel occurring due to the rheology of a slurry contained in the inner vessel in a mixing operation of a mixer and, thus, may effectively prevent the vibration of the inner vessel.

Moreover, a hydraulic cylinder disposed at a periphery of the outer vessel may receive and reduce, through a link member, vibration of the outer vessel occurring due to the rheology of the slurry occurring in the mixing operation of the mixer and, thus, may effectively prevent the vibration of the outer vessel.

It will be apparent to those skilled in the art that various modifications and variations can be made in the present disclosure without departing from the spirit or scope thereof. Thus, the present disclosure is intended to cover all modifications and variations provided they come within the scope of the appended claims and their equivalents.

## Claims

1. A vibration prevention apparatus (200) for reducing vibration of an inner vessel (122) occurring in a mixing operation of a mixer (100) used in manufacturing of an electrode slurry, the apparatus comprising:
a rotation roller member (210) between the inner vessel (122) and an outer vessel (124) extending around the inner vessel (122); and
a damping cylinder (220) on the outer vessel (124) and configured to absorb the vibration transferred through the rotation roller member (210) to reduce the vibration.

2. The apparatus (200) as claimed in claim 1, wherein the damping cylinder (220) is arranged at equal intervals on an outer surface of the outer vessel (124).

3. The apparatus according to any of claims 1 or 2, wherein the rotation roller member (210) is arranged at equal intervals at a position corresponding to the damping cylinder (220) between the inner vessel (122) and the outer vessel (124).

4. The apparatus (200) according to any of the previous claims, wherein the rotation roller member (210) comprises:
a roller (212) configured to rotate in contact with an outer surface of the inner vessel (122); and
a fixing member (214) configured to fix the roller (212).

5. The apparatus (200) according to any of the previous claims, wherein the damping cylinder (220) comprises:
a cylinder body (222);
a piston rod (224) configured to pass through the outer vessel (124) and receive vibration of the inner vessel (122) from the rotation roller member (210);
a piston (226) connected to the piston rod (224) and configured to move backwardly in the cylinder body (222) based on the vibration of the inner vessel (122) transferred from the piston rod (224); and
a damping medium (228) configured to be compressed and expanded to absorb the vibration of the inner vessel (122) based on the movement of the piston (226) in the cylinder body (222).

6. The apparatus (200) as claimed in claim 5, wherein the damping medium is air or a fluid.

7. A vibration prevention apparatus (300) for reducing vibration of an outer vessel (124) occurring in a mixing operation of a mixer (100) used in manufacturing of an electrode slurry, the apparatus (300) comprising:
a link member (310) in contact with the outer vessel (124) and configured to rotate based on vibration of the outer vessel (124); and
a hydraulic cylinder (320) configured to absorb the vibration of the outer vessel (124) transferred by a rotation of the link member (310) to reduce the vibration.

8. The apparatus (300) as claimed in claim 7, wherein the apparatus (300) is arranged at equal intervals on a perimeter of the outer vessel (124).

9. The apparatus as claimed in any of claims 7 or 8, wherein the link member (310) comprises:
a first end portion (311) configured to contact a jaw (124A) at an upper end of the outer vessel (124);
a second end portion (312) rotatably connected to a piston rod (324) of the hydraulic cylinder (320); and
a third end portion (313) rotatably connected to a plate (60) disposed on the outer vessel (124).

10. The apparatus (300) as claimed in claim 9, wherein a rotation roller (311A) contacting the jaw (124A) at the upper end of the outer vessel (124) is connected to the first end portion (311).

11. The apparatus as claimed in any of claims 7 to 10, wherein the hydraulic cylinder (320) comprises:
a cylinder body (322);
a piston rod (324) connected to one end portion (312) of the link member (310) and configured to receive the vibration of the outer vessel (124) from the link member (310);
a piston (326) connected to the piston rod (324) and configured to move backwardly in the cylinder body (322) based on the vibration of the outer vessel (124) transferred from the piston rod (324); and
a hydraulic fluid (328) configured to be compressed and expanded to absorb the vibration of the outer vessel (124) based on the movement of the piston (326) in the cylinder body (322).

12. An apparatus for reducing vibrations of an inner vessel (122) and an outer vessel (124) occurring in a mixing operation of a mixer (100) used in manufacturing of an electrode slurry, the apparatus comprising:
a first vibration prevention apparatus (200) configured according to any of claims 1 to 6; and
a second vibration prevention apparatus (300) configured according to any of claims 7 to 11.

13. The apparatus as claimed in claim 12, wherein the second vibration prevention apparatus is arranged on the first vibration prevention apparatus.

14. Mixer (100) for manufacturing an electrode slurry comprising an inner vessel (122) and an outer vessel (124), the outer vessel (124) extending around the inner vessel (122), and further comprising a first vibration prevention apparatus (200) configured according to any of claims 1 to 6; and/or a second vibration prevention apparatus (300) configured according to any of claims 7 to 11; or wherein the mixer (100) further comprises an apparatus for reducing vibrations of the inner vessel (122) and an outer vessel (124) configured according to any of claims 12 or 13.

15. The mixer (100) according to claim 14 wherein the inner vessel (122) is rotatable with respect to the outer vessel (124); and/or wherein the first vibration prevention apparatus (200) is arranged at equal intervals on an outer surface of the outer vessel (124); and/or the second vibration prevention apparatus (300) is arranged at equal intervals on a perimeter of the outer vessel (124).
